# FASCICULE DE BREVET EUROPEEN

(11) **EP 0 712 678 B1**
(45) Date de publication et mention de la délivrance du brevet: **12.03.2003**
(21) Numéro de dépôt: 95500158.1
(22) Date de dépôt: 21.11.1995
(51) Int. Cl.: B23G 1/18, B23Q 1/54

(54) **Taraudeuse électro-hydromécanique**
Elektro-hydromechanische Gewindebohrmaschine
Electro-hydromechanic tapping machine

(30) Priorité: 21.11.1994 ES 9402382
(43) Date de publication de la demande: 22.05.1996
(73) Titulaire: Benito Bernal, Angel Francisco, 20150 Villabona (Guipuzcoa) (ES)
(72) Inventeur: Benito Bernal, Angel Francisco, 20150 Villabona (Guipuzcoa) (ES)
(74) Mandataire: Urizar Barandiaran, Miguel Angel

(56) Documents cités:
- EP-A- 0 459 933
- FR-A- 2 320 163
- US-A- 5 346 337

## Description

La présente invention se réfère à une machine à tarauder selon la préambule de la revendication 1 et comme connu du document EP-A-0459933.

En particulier la machine à tarauder selon l'invention associe certaines caractéristiques mécaniques, hydrauliques et électriques en vue de réaliser des filetages de manière plus sûre, rapide, précise et économique qu'avec d'autres machines à tarauder conventionnelles.

La machine faisant objet d'invention fonde son fonctionnement principalement sur le fait de faire tourner un taraud ou écrou-filiére sur un trou dans lequel on prétend réaliser un filetage de métrique variable déterminée, pour la machine qui nous intéresse ici entre une métrique 2 et une métrique 45. La poupée porte-tarauds ou porte-filières, pour ce faire, se trouve encadrée dans un système de bras articules, dont la position se trouve définie dans des coordonnées cylindriques comportant un système de déplacement dans un plan à coordonnées polaires, portant le porte-tarauds ou le porte-filières, à la verticale de n 'importe quel point désiré de la table de travail ou en dehors de celle-ci, qui soit situé dans un rayon de 1,5 mètre, à l'aide d'un parallélogramme defini dans l'articulation soutenant le porte-tarauds ou porte-filière, permettant que soit maintenu le point choisi dans le plan en baissant manuellement la poupée porte-taraud ou porte-filière jusqu'à l'avant trou, en absorbant la différence éventuelle de plan de la descente verticale, à travers un système que nous développerons plus avant. L 'effet de sensibilité, précision et stabilité que l 'on obtient grâce a ce systéme, évite que les filières ou tarauds se brisent du fait des vibrations que peut transmettre l'operateur lors du serrage manuel de la poupée porte-taraud ou porte-filières, de par l 'effort que ceci suppose.

Les nouveautés qu'elle comporte par rapport aux anciennes machines développés sur le marché commencent par l'intégration à la poupée d'un réducteur, lequel en modifie la vitesse par puissance de tour, ce qui ne manque pas d'offrir une meilleure stabilité dès l'instant où l'on prétend réaliser des filetages à métriques de grande valeur, ou trous filetés dans des matériaux excessivement durs ou difficiles à travailler. Ce réducteur, qui se trouve situé sur la poupée, intervient directement dans la constitution de deux gammes spécifiques complémentaires au niveau de la valeur vitesse et puissance, ce qui permet d'accroître la gamme de possibilités dès lors que l'on prétend travailler à de faibles vitesses, à une puissance de tour plus grande.

Il est connu par le brevet EP0459933 une machine à tarauder qui comprend une poupée (22) montée sur l'extrémité d'un bras articulé supportant un moteur hydraulique (23) et un porte-outils (25) auquel est fixé le taraud (26). Sur l'un des côtés de la table de travail se trouve la base du bras articulé, lequel se déplace sur n'importe quelle position de la dite table, ce bras consistant en une barre élévatrice. Elle est caractérisée en ce que le bras comprend un jeu de tiges (11-16) orthogonales, formant des coordonnées, la première tige pouvant glisser le long d'un support horizontal giratoire (8), alors que la seconde, qui supporte un parallélogramme articulé (18-20-22-20'), glisse le long de la première. L'un des petits côtés de ce parallélogramme porte la poupée, sur laquelle agit une excentrique (36) mue par un ressort (29), l'équilibrant et tendant à la placer en position de repos.

Mais le demandeur dans l'invention a développé une machine à tarauder qui combine une série de caractéristiques pour réaliser des filetages de manière plus sûre, rapide, précise et économique (le problème à résoudre).

Une combinaison déterminée de mouvements des éléments constitutifs de la machine sont nécessaires pour positionner la poupée porte-tarauds à la verticale de n'importe quel point désiré d'une manière sûre, rapide et précise. Dans l'invention, le mouvement (lever-baisser) est obtenu parce que la barre élévatrice est coaxiale à une barre intérieure, entre les deux barres élévatrice et intérieure dans sa partie inférieure existant un ressort ayant pour fonction de séparer de ladite partie intérieure ladite barre élévatrice.

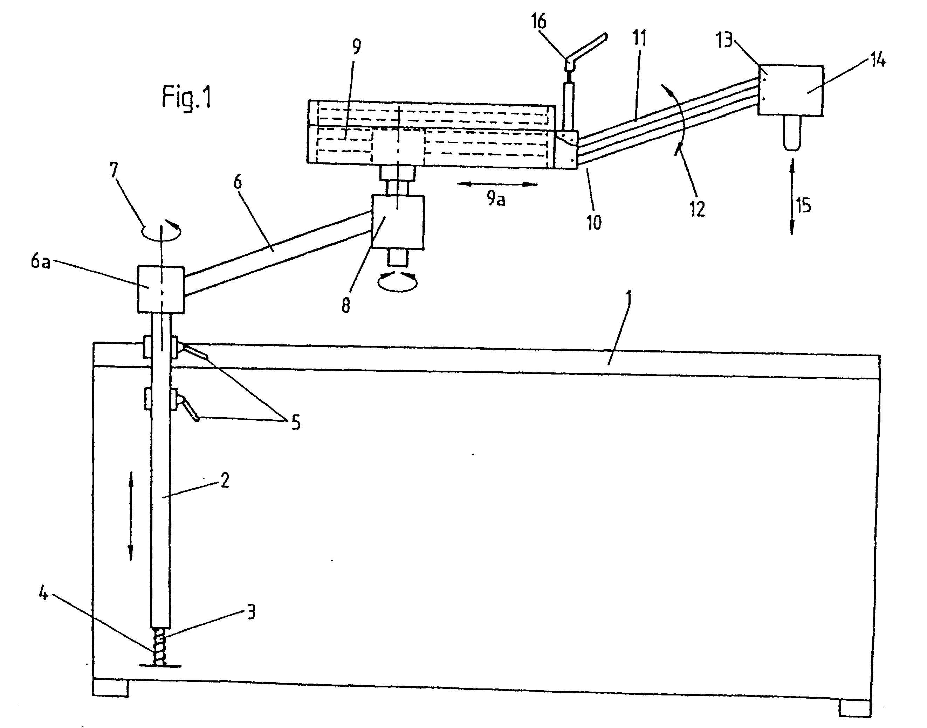

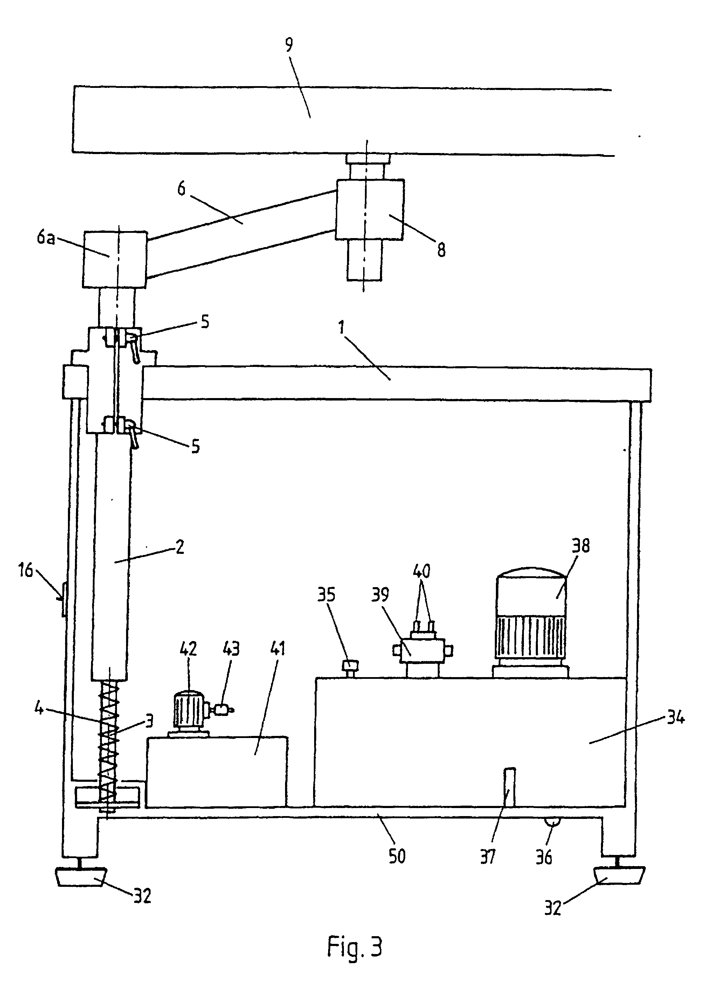

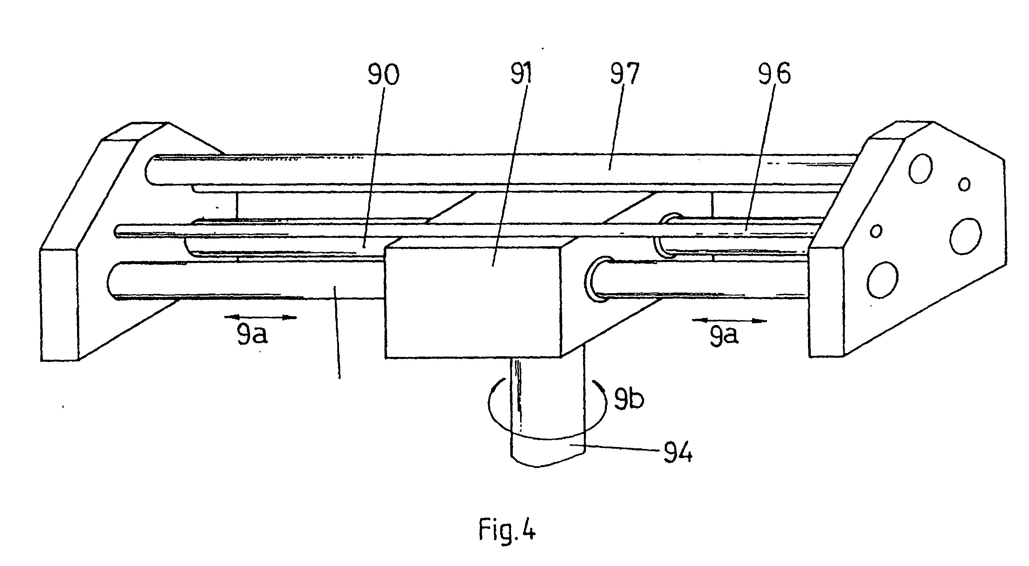

La barre élévatrice (fig. 3-2) sert à lever ou baisser et, occasionnellement, à faire tourner manuellement (fig. 1-7), le bras de la machine à tarauder. La barre en question (fig. 3-2) est un axe-creux dans lequel se loge un ressort (fig. 3-4), guidé par une barre intérieure (fig. 3-3). La fonction dudit ressort (fig. 3-4) est d'aider à lever la barre (fig. 4.2), en lâchant les manettes (fig. 3-5), qui bloquent l'élévation de la barre (fig. 3-2), à condition que le poids de l'ensemble supporté (bras de filetage) se trouve centré sur l'axe de la barre (fig. 3-2) car, dans le cas contraire, ceci serait sans objet.

L'élévation de l'ensemble de filetage est provoqué par le déplacement que réalise l'axe (fig. 3-2) "impulsé à partir de sa partie inférieure par un ressort" (fig. 3-4), sur un guidage situé sur la table. L'ensemble se trouvant uni au bout dudit axe, il s'élèvera également autant de fois que l'on fera bouger l'axe (fig. 3-2), un tel mouvement n'intervenant pas dans l'opération de filetage sur le positionnement antérieur du sous-ensemble qui supporte le bras et la tête de filetage.

Pour provoquer l'abaissement de l'axe (fig. 3-2), et de tout ce que ce dernier déplace, il est nécessaire d'appliquer une impulsion manuelle vers le bas.

L'invention comprend aussi que le bras support articulé s'étend légèrement incliné ascendant vers une seconde union (8) située en bout de course de ce bras support (6) avec un corps prismatique (9), ledit corps prismatique étant le protecteur d'un système intérieur de barres de guidage qui consiste en deux barres-rail de guidage (90) par lesquels roulera une boîte coulissante (91) à l'aide de roulements longitudinaux (93), l'ensemble étant doté à son union avec une barre de fixation verticale (94) du système de barres coulissantes, les deux roulements coniques (95) inférieur et supérieur permettant le mouvement de rotation dudit ensemble, ce système étant assisté par deux barres symétriques longitudinales (96) servant de barres de stabilisation, ainsi qu'une barre supérieure longitudinale (97), dont la fonction n'est autre que celle de servir d'anti-torsion de l'ensemble, et une articulation double (10) se situant en bout de course de ce protecteur du système de barres où viennent s'unir un parallélogramme (11) avec un mouvement de rotation vertical, l'extrémité de celui-ci (11) étant équipé de la poupée de taraudage (14).

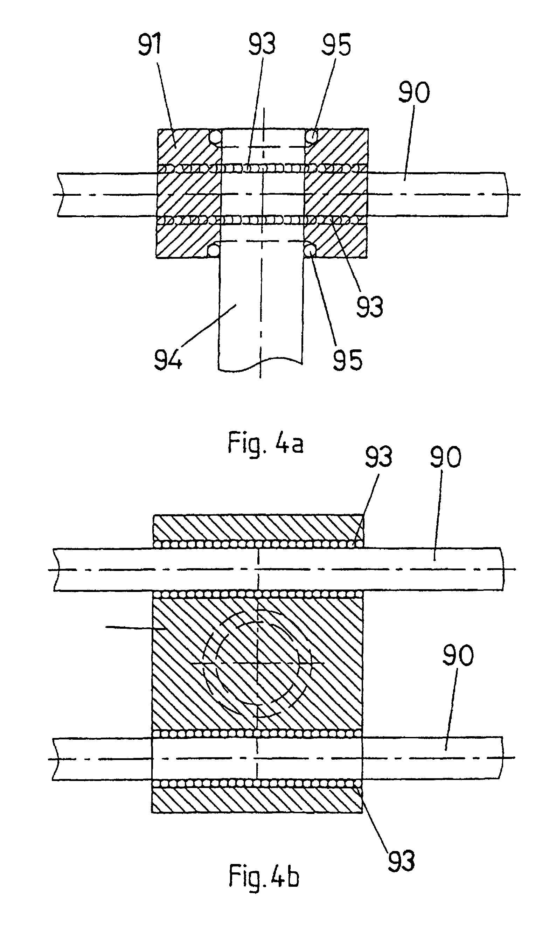

L'objectif de ce sous-ensemble barres-rail (fig. 4) est d'obtenir un mouvement linéaire et circulaire précis tout au long du parcours des barres (fig. 4-96 et 97) avec la plus grande précision et résistance à la torsion, pression, tangage et inclinaison à quoi est soumis le sous-ensemble (fig. 4), dans la mesure où il supporte à l'une de ses extrémités l'ensemble poupée de filetage (14).

Pour y parvenir les barres-rail (fig. 4-90) opérant un mouvement longitudinal (9a) et glissant sur les roulements linéaires (fig. 4-93), sont accompagnées d'une barre supérieure en aluminium (fig. 4-97) : sur leur parcours entre les panneaux d'appui des bouts du sous-ensemble (fig. 4) pour en éviter la torsion et deux tendeurs de serrage (fig. 4-96) de manière à en éviter le tangage ou la chute, dans quelque position qu'ils se trouvent, par rapport à leur point d'appui.

Les tendeurs de serrage (fig. 4-96) servent de plus à régler le tangage ou le balancement sur le parcours longitudinal des barres (fig. 4-90); surtout lorsque ces dernières se trouvent dans leur longueur maximale.

Il est connu un sous-ensemble barre-rail dans le brevet US5346337, mais dans le modèle américain, les barres (fig. 20) ne sont pas accompagnées d'une troisième barre, ce qui entraînera une légère torsion sur les barres lorsqu'elles se trouveront en train d'exécuter un travail quelconque. Elles seront également soumises à des tangages et balancements., dans la mesure où elles ne disposent pas de tendeurs de serrage, ce qui a pour résultat que les barres (fig. 20) présentent une légère inclinaison, balancement ou tangage; qui augmentera d'autant que la distance de ces dernières sera plus importante, par rapport à leur point d'appui. Autrement dit, plus on aura de distance, plus importante en sera l'imprécision.

Dans le modèle américain, les barres (fig. 20) sont parcourues par les poupées de filetage (fig. 14).

Notre brevet, à travers les éléments d'appui mentionnés auparavant, travaillera sans tangages ni balancements; sur tout sa longueur de parcours et sans inclinaisons en donnant comme résultat un déplacement homogène et précis; nécessaire et fondamental, pour réaliser un travail précis.

Un autre des perfectionnements apportés consiste dans un contrôle électronique de la vitesse de filetage, laquelle variera selon la difficulté du filetage, ou selon la taille du filetage à réaIiser. Ce controle de vitesse comporte deux commandes variables, lesquelles se livrent à un contrôle séparé du tour à droite et du tour à gauche, lesdits contrôles se situant sur le châssis près du reste des commandes et boutons designalisation. Le réducteur est muni d'une commande mécanique à double position en vue d'effectuer les changements de gamme pour travailler directement de petites métriques, ou multiplier la puissance pour travailler de grandes métriques, ou des materiaux à haute résistance. La carcasse qui enveloppe les engrenages formant l'ensemble du réducteur se réalise, afin de réduire le poids de la poupée, en aluminium dur, ceci afin d ' avoir un moindre poids et une plus grande sensibilité de la poupée.

Autre nouveauté incorporée a la machine, le contrôle électronique de vitesse de filetage, qui variera selon la métrique ou la dureté du materiau à fileter .

Les moyens de rotation des tarauds sur les machines conventionnelles s'effectuent au moyen d'un moteur electrique, lequel se connecte directement au réseau et tourne a vitesse constante. Connecté postérieurement à une pompe oléohydraulique lui fournit de la puissance à un moteur solidaire au corps de tour du porte-tarauds, il permet de varier la vitesse par étranglement du débit d'huile du circuit oléohydraulique, endonnant pour résultat que le rang de variation par étranglement est moindre, de là qu 'il faille deux contrôles différents pour des valeurs de faible vitesse et valeurs de grandes vitesses.

Dans la machine objet de l'invention, le contrôle de la vitesse de filetage se réalise au moyen de deux commandes variables, lesquelles contrôlent séparément le tour à droite et à gauche et se trouvent situées sur le châssis près du reste des commandes. On a elimine le recours, pour réaliser ce contrôle sans pertes de puissance, au circuit d'étranglement du débit d'huile, lequel à été substitué par un convertisseur ou transformateur de fréquence venant réguler électroniquement la vitesse du moteur électrique du groupe oléohydraulique.

Le convertisseur ou transformateur de fréquence contrôle le moteur à travers la variation de la fréquence d'alimentation au moteur, ledit moteur pouvant tourner à différentes tours-minute, selon la fréquence fournie par le convertisseur ou variateur. Le convertisseur ou transformateur de fréquence, en outre, protège le moteur électrique contre toute hausse ou baisse de tension, de surchauffe, de pertes de puissance et de protection â la terre.

Autre atout du convertisseur ou transformateur de fréquence, il admet certaines courbes de couple/vitesse, susceptibles d'être modifiées, le contrôle se realisant tout au long de la courbe.

Un avantage additionnel qu'apporte la machine dont il s'agit ici tient aux moyens de mesurage de la longueur de filetage en pleine opération. Dans la méthode conventionnelle, le mesurage de filetage s'effectue, une fois connue la donnée de la longueur désirée, de manièrethéorique, en calculant le nombre de filets de taraud a réaliser, ce qui permet de calculer le nombre de tours que le porte-taraud doit réaliser afin d'effectuer un trou fileté d'une certaine longueur. Dans ce cas, nous observons que le raisonnement est valable en théorie mais qu'il présente des limitations dans la pratique, dans la mesure où il ne compte pas avec la tolérance des éléments intervenant dans le filetage. L'accumulation, aussi bien par défaut que par excès, de ces tolérances peut finir par fausser la longueur du filetage, jusqu'au point de dépasser la valeur maximum que permet la tolérance de ce filetage.

II nous faut réaliser pour cela un système de mesurage qui n'envisage non seulement aucun calcul théorique mais que la valeur de longueur que donne la machine soit éminemment pratique ou réel. Compte tenu de cette premisse, il y a été intégré une cellule photo-électrique, contrôlant le passage du bras depuis l'amorce du filetage à une valeur préétablie, c'est la propre cellule qui permet de parvenir a ladite valeur, faisant s'inverser le sens de tour du taraud, afin de definir le bout du filetage. La longueur de filetage sera toujours de la sorte requise.

Un perfectionnement additionnel introduit dans la machine de l'invention réside dans le système antitorsion dont elle dispose. On se heurte en effet avec les taraudeuses à un probleme incontournable á long terme sur la machine, consistant en ce que du fait du premier contact du taraud avec les matériaux, l'effort de frottement à la torsion qu'il lui faut supporter en première instance pour commencer a extraire le matériau est très supérieur a celui que rencontrera le taraud une fois celui-ci situé en un point intermédiaire du parcours longitudinal du filetage. L'effet que réaIisera le bras pour contrecarrer ce premier effort sera une réaction en sens contraire et de même importance, ce qui donnera lieu à ce qu 'il se produise dans les diverses articulations une série de jeux qui seront préjudiciables à la stabilité de mouvement du bras à n 'importe lequel des points articulés.

La machine objet de cette invention a résolu ce problème grâce à un double système antitorsion; le premier consiste dans l'incorporation d'un degré de liberté de rotation sur le porte-taraud ou Porte-filière, lequel absorbera à tout moment le premier effort de torsion, en libérant le reste du bras et ses articulations de ce travail. Le second système consiste en un système de tiges de stabilisation et une barre antitorsion situées au dessus des axes horizontaux du bras, qui supportent et dissipent l'effort de torsion, en protegeant les articulations de la machine de tout effort. En outre, la base sur laquelle s'appuie le bras principal de la machine est equipée d'une serie de vis destinées à compenser les eventuelles déformations élastiques susceptibles de surgir au cours du temps.

En dehors du perfectionnement ci-dessus, il a été ajouté un système anti-cassure de tarauds, sachant que le principal facteur de cause de la cassure de nombre de tarauds au moment de prise de premier contact avec la pièce à tarauder vient du fait, en dehors du problème commenté ci-dessus, que le premier élément subissant la réaction du materiau face au contact avec la poupée est le taraud lui-même. L'effet qu'il subit consiste en ce qu'il se produit, dès que le filetage commence a tourner vers la droite, une réaction contraire dans le matériau, ce qui tend a freiner la rotation du taraud. Celui-ci se trouve à une extrémité tenu par le porte-taraud et de manière virtuelle, également tenu à l'extrémité opposée par le matériau, ou plus exactement par la réaction contraire du matériau, ce qui produit sur le taraud un effet de torsion qui fait bouger le taraud dans la coordonnée verticale vers l'interieur du porte-taraud. On observe à cet instant que le taraud se trouve soumis à un moment de torsion duquel il lui faut se libérer en un endroit ou un autre, et à un effet de compression additionnel, ce qui dans nombre de cas produit la cassure du taraud du fait de la conjonction du moment de torsion lui-meme et de l'effort de compression sur la pièce taraudee, laquelle est habituellement cylindrique de faible diamètre en comparaison avec sa longueur.

On a prevu, afin de prevenir ces cassures qui ont autant d'incidence sur le rendement de la machine que sur le coût de remplacement des outils et instruments, de situer à l'interieur du porte-taraud des cylindres périmétraux et quatre taquets de caoutchouc a son bord superieur afin d'amortir et d'absorber le moment de torsion et l'effort de compression, grâce à quoi le contact direct entre les engrenages de rotation et le taraud s'élimine. En régime stable d'operations, ces caoutchoucs ne sont d'aucune utilité, ils sont au plus un élément supplementaire dans la transmission de mouvement de rotation, mais comme nous l'avons indiqué, leur fonction résulte très avantageuse lors du premier contact du taraud avec le matériau.

Une autre nouveauté tient à la configuration des articulations du bras à fileter, lequel est apte à tourner sur un axe vertical et à se déplacer sur deux axes horizontaux, avec la précision maximale et un effort minimal.

Le bras sur les machines conventionnelles adopte la forme d'un compas défini par deux parallélogrammes, à l'un desquels se trouve articulé la poupée porte-taraud, tandis que l'autre reste en conditions de tourner librement sur un axe vertical, supporté par un bras que toume à son tour sur un axe vertical. Ce système adopté par les machines conventionnelles présente de graves inconvénients comme la faible précision du compas une fois bloqué sur un plan vertical, dans la mesure où en raison de la longueur notable il lui sera impossible d'éliminer un minimum de deformations élastiques. Un autre inconvénient de ce type de machines réside dans le fait que le mouvement de récuperation du bras se réalise au moyen de ressorts hélicoïdaux qui tendent constamment à le contraindre, en obligeant l'opérateur a réaliser des effort physiques relativement importants pour situer le taraud dans la position de travail, l'effort à réaliser étant d'autant plus grand que le sera la distance à laquelle se trouve situé le trou à fileter de l'axe du bras.

Le bras, sur la machine issue de cette invention, se trouve compris en forme de parallélogramme articulé, lequel est monté à l'extrémité d'un système mécanique de coordonnées, défini par deux axes horizontaux en parallèle entre eux, pouvant se déplacer librement et se trouver bloqués dans n'importe quelle position, avec la plus grande faciliée grâce au fait qu'ils se déplacent sur des roulements linéaires et d'autres, coniques, situés dans le système mécanique de coordonnés. A l'une des extrémités des axes horizontaux se trouve placée la poupée porte-tarauds ou porte-filières, dont les déplacements horizontaux se réalisent au moyen des axes mentionnés plus haut, tandis que le déplacement vertical pour réaliser le filetage se réalise au moyen d'un système excentré, pour lequel il n'est exigé qu'un effort minimal. Tout cet ensemble se trouve supporté par un axe vertical (lequel est uni a la table de la machine au moyen d'une base), qui peut lever ou baisser tout le bras vertjcalement à l'aide d'un ressort, en vue de réaliser ladite opération avec le moindre effort.

Perfectionnement encore, secondaire certes, celui du contrôle électronique de la machine objet de cette invention, qui consiste à y avoir incorporé un système d'économie de solution d'huile soluble ou liquide de refroidissement. Nul n'ignore le besoin de refroidir le taraud à l'aide d'un liquide de refroidissement ou d'huile soluble, ce qui en prévient la cassure par échauffement excessif confronté comme il l'est au frottement si énorme que suppose l'arrachage du matériau métallique par un métal encore plus dure, ce qui permet de travailler de manière continue avec le même outil. Pour ce faire, toutes les machines-outils disposent d'un tube qui affronte le lieu où opère l'outil ou instrument de travail, en expulsant continuellement en cet endroit le liquide en question. Il existe conventionnellement un contrôle manuel d'expulsion de solution d'huile soluble, de là que l'on a opté pour une troisième option lors de ce contrôle consistant à ce que de manière automatique il n'expulse d'huile que lorsque le taraud réalise le filetage.

Tous ces perfectionnements ont permit d'améliorer dans la pratique la machine taraudeuse, ce qui en augmente le rendement au niveau de facteurs tels que moindres cassures de tarauds, plus grande sensibilité et moindre effort de mouvement du bras articulé pour l'operateur, contrôle automatique de la longueur a tarauder et meilleure maintenance à long terme de la machine.

On a représenté, pour mieux comprendre l'objet de la présente invention sur les plans annexes, une réalisation pratique qui en donne une image fidèle. Sur ces plans:
La figure 1 correspond à un dessin schématique de l'aspect extérieur de la machine de l'invention, mettant tout spécialement l'accent sur les bras et articulations, qui déplacent la poupée à tarauder.
La figure 2 correspond à une vue frontale de l'aspect extérieur de la machine de l'invention sur un aspect de réaIisation éminemment pratique.
La figure 3 correspond à une vue frontale en coupe de la machine de l'invention sur laquelle on observe l'emplacement des dispositifs et équipements internes de la table de travail.
La figure 4 correspond à une vue en plan de l'intérieur du système de barres antiglissantes.
La figure 4a correspond à un détail frontal en coupe de l'union du support avec le système de barres anti-glissantes.
La figure 4b correspond à une représentation en coupe du plan de la poupée pour distinguer les éléments composant le sysèeme anti-cassure des tarauds.
La figure 5 correspond à une représentation en coupe du plan de la poupée visant à distinguer les éléments composant le système anti-cassures des tarauds.

Ainsi que nous l'avons avancé lors de commentaires précédents et nous basant sur les figures antérieurement définies et concrètement sur la figure 1, la machine de l'invention comporte une table de travail (1) sur laquelle on a placé sur l'une de ses marges la base du bras articulé que nous développerons plus loin. Ledit bras évolue dans n'importe quelle position de ladite table (1), en faisant usage de son mecanisme, lequel confère le mouvement selon des coordonnées cylindriques. la base de ce bras consiste en une barre elevatrice (2) coaxiale à une barre intérieure (3), un ressort (4) existant entre l'une et l'autre (2) et (3) dans leur partie inférieure, ressort qui à tout moment tend à élever la barre (2). De manière à fixer la position d'élévation, on a disposé des tendeurs de serrage (5) qui fixent la hauteur de la barre élévatrice (2). Il existe, immédiatement plus haut que ces tendeurs (5) une union articulée (6a) qui permet de tourner le bras support (6) situé à la suite, ainsi que le signale la fleche (7) autour de l'axe de révolution. Cette articulation (61) dotera le bras du premier degré de liberté. Le bras support (6) s'étend de manière fixe et légèrement inclinée ascendante vers une nouvelle union (8) située au bout du parcours du bras de support (6) et qui s'unit dans sa partie supérieure à un corps prismatique (9) qui s'avère un protecteur d'un système intérieur à barres de glissement, ce qui permet de les transférer horizontalement, ainsi qu'exposé sur la flèche (9a), a l'ensemble que nous exposerons ci-après, ce qui suppose un second degré de liberté.

Ledit système à barres de glissement 9, ainsi qu'il ressort de la figure 4 et des détails des figures 4a et 4b, consistera en deux barres-rail de guidage (90) sur lesquelles roulera la boîte de coulissage (91) â l'aide des roulements longitudinaux (93) qui dotent cette boîte du mouvement déterminé par les flèches (9a), contenant également à leur union avec l'attache verticale (94) les deux roulements coniques (95) qui permettent le mouvement rotatif, selon les indications de la flèche (9b). En vue d'assister ledit système et dans la même ligne détaillée en préambule du présent document, on a prévu de doter l'ensemble de deux barres symétriques longitudinales (96) comme barres stabilisatrices, ainsi qu'une barre supérieure longitudinale (97) dont la fonction n'est autre que de servir d'anti-torsion a l'ensemble.

Il existe à l'extrémité de ce protecteur (9) une articulation double (10) où s'unit un parallélogramme (1) qui réalise un mouvement de rotation vertical, ainsi qu'observe sur la flèche (12). De cette manière et grâce à une nouvelle articulation (13) nous obtenons a la fin du parallélogramme (11) qu'au moyen de la combinaison de mouvements du parallélogramme (flèche 12) et du système de barres à glissières (flèches 9a), respectivement, la poupée de filetage (14) parvienne à réaliser le mouvement vertical defini selon la flèche.

Dans le souci d'améliorer la sensibilité de manutention du ras articulé dans ses mouvements de parallélogramme (11) on a dote l'articulation (10) d'une commande (16) située dans la partie supérieure de ladite articulation, pouvant, de la sorte, adapter les mouvements et effort manuel de mobilité de la poupée selon le taraud que l'on doit utiliser pour une opération de filetage spécifique.

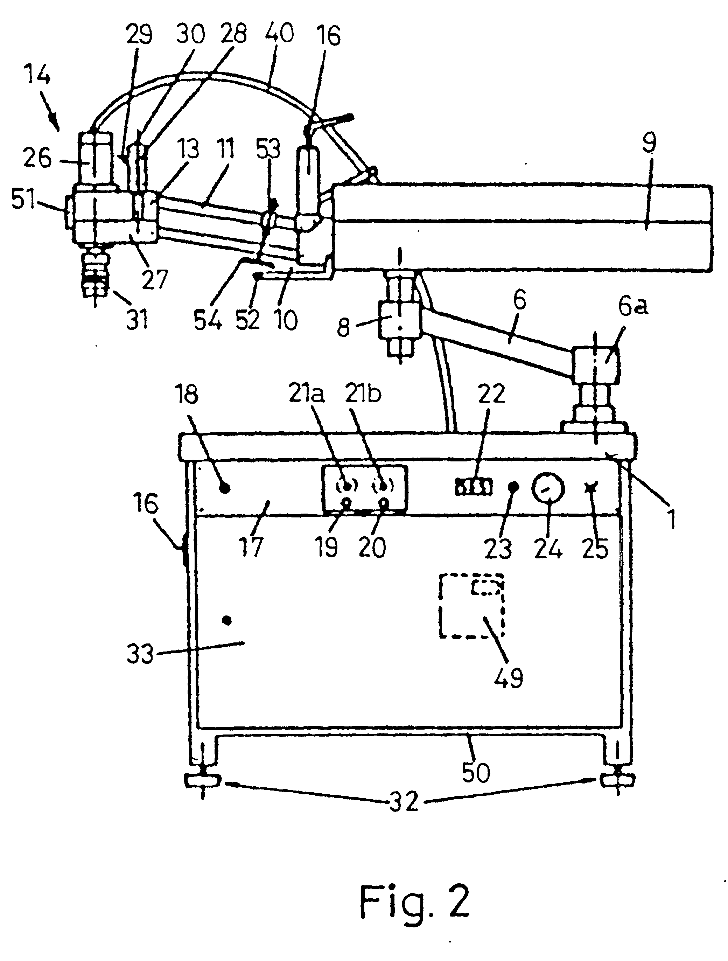

Une fois reconnus les mouvements que l'on peut extraire du bras taraudeur de la machine objet de l'invention, nous baserons sur la figure 2, ou l'on a tenté de rassembler une vue frontale de l'ensemble général de ladite machine, de manière à distinguer les éléments les plus importants qui la composent.

Nous observerons sur cette figure 2, de la même manière que sur la figure 1, que l'ensemble du bras articulé taraudeur s'appuie sur un axe de rotation (7) sur le banc ou table de travail (1). Sur ladite table a été disposé un interrupteur (16) situé sur l'un des côtés de la table elle-même, à travers l'actionnement (16) duquel il est possible de réaliser l'allumage ou l'extinction générale de la machine, aussi bien du système de force qui reunit l'alimentation des pompes et des moteurs, que du système de manoeuvre et d'éclairage des signalisateurs.

Un panneau (17) a été disposé sur le devant de la table de travail (1), equipé des interrupteurs, signalisateurs, commutateurs et regulateurs, qui permettront le contrôle total et le fonctionnement de la machine, à l'exception des éléments de connexion directe avec la tête taraudeuse, que nous définirons plus avant. Sur ledit panneau (17) et en partant de la gauche pour aller vers la droite, nous avons en premier lieu le commutateur (18) du contrôle de l'expulsion de solution d'huile soluble ou liquide de refroidissement du taraud. Ce commutateur (18) comporte 3 positions, susceptible de selectionner soit une déconnexion de l'huile de refroidissement, soit une connexion permanente qui permet à tout moment l'expulsion d'huile vers le taraud, soit enfin une troisième position ou position économique, qui perm et uniquement l'expulsion d'huile au moment ou le taraud réalise un travail de filetage, cette position pouvant se réaliser par un contrôle électronique soumis aux pressions de boutons poussoirs d'actionnement du moteur faisant toumer le taraud, et que nous développerons dans un point posterieur.

A la suite du commutateur (18) se trouvent deux signalisateurs lumineux qui indiquent respectivement, le premier (19) la marche de la poupée taraudeuse, et le second (20) l'allumage général de la machine. Plus haut se trouvent les commandes (21a) et 21b) qui déterminent l'un et l'autre la régulation de la vitesse de taraudage et dans le sens d'extraction du taraud une fois filetée la pièce sur laquelle on est en train de travailler. Il s'agit de contrôles électroniques qui agissent directement en série avec les boutons-poussoirs de marche dans un sens et un autre, placés sur la tête taraudeuse et que nous définirons plus avant.

Le signalisateur (22) concerne un indicateur comportant trois unités de displays à 7 segments, à travers lequel on obtient la vitesse de filetage du taraud offerte en tours/minute.

Les éléments disposés ci-après forment le bloc de régulation et de mesure du circuit hydraulique interne qui active le moteur de taraudage. Il s'agit d'un régulateur (22) de la pression du circuit hydraulique, d'un manomètre (24) indiquant quantitativement ladite pression et d'une valve (25) de protection dudit manomètre (24).

La tête de filet, déterminée de manière générale comme (14) sur la figure 1, se trouve plus développée sur la figure 2. Sur cette figure 2, la tête (14) se trouve articulée au parallélogramme (11) situé à l'extrémité du bras articulé, et contient les éléments d'actionnement et moteurs du taraudeur.

Sur la tête en question sont directement installés le moteur électrique (26) et le réducteur (27) comme éléments moteurs qui couvrent la gamme de vitesse de filetage pour laquelle a été déssinée la machine de cette invention. On a disposé sur cette tête de filetage (14) une commande ou poignée (28) grâce à laquelle l'opérateur tiendra l'ensemble de la tête taraudeuse et entamera le mouvement d'approche vis-à-vis du taraud à fileter, toujours assisté par les mouvements lui permettant les diverses articulations du bras articulé, déjà développé dans un point précédent: Ladite commande (28) consiste en une pièce cylindrique adaptable à la main, sur laquelle dans la position centrale de la génératrice extérieure de la surface courbe de ladite pièce cylindrique a été disposé un interrupteur (29) qui habilite le fonctionnement des éléments moteurs (26) et (27), lesquels sont actionnés directement par bouton-poussoir (30) qui, lorsqu'on le pousse, produit le signal électrique excitant le contacteur, lequel verrouille un contact associé qui fermera le circuit électrique. Comme préalablement on a realisé une tare sur la cellule photo-électrique (52), ainsi qu'on peut l'observer dans sa position de la figure 2 proche du parallélogramme (11), à travers un mesureur (53) de précision a l'extrémité duquel vient se placer un positionneur (54) comme élément déterminant de la coupure du faisceau de lumière qu'émet la photocellule (52), au moment où ladite cellule (52) reconnait la fin de course du filetage. On désexcitera alors le contacteur en question pour verrouiller ensuite un second contacteur qui fera tourner le moteur en sens contraire, de manière à extraire le taraud de filetage du filet realisé sans endommager ce dernier.

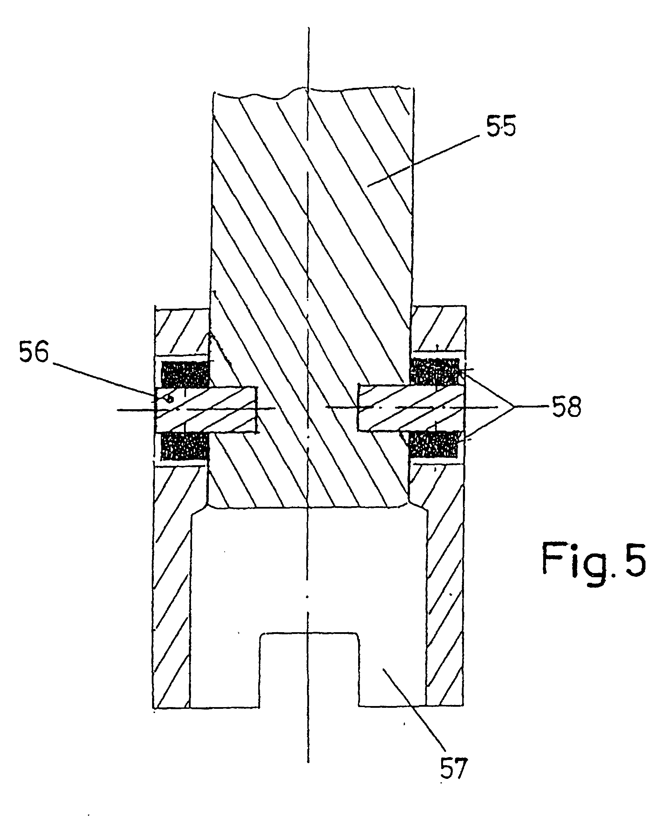

Sur la partie avant de l'ensemble réducteur (27) a été disposé un interrupteur (51) qui change la gamme de vitesses, c'est-à-dire qui commute l'ordre moteur d'incorporation du réducteur ou non, en fonction de la vitesse que nous voulons donner a la tête rotative (31) et, par voie de conséquence, au taraud de filetage qui s'y adapte (31), selon la taille du filet et la nature du materiau a fileter. La tête rotative à laquelle nous avons fait allusion consiste en un porte-pince à changement rapide où se placeront les tarauds dans le sens de la hauteur, et sur laquelle a été disposé intérieurement le dispositif anti-cassure de tarauds, représenté sur la figure 5 comme un détail en coupe de l'extrémité de la tête (31), dont on observe qu'il se compose d'un axe de poupée (55), relié à travers un cylindre d'union (56) à la douille (57) de la poupée (31). Il existera en raison de la géométrie de ces pièces une série de creux entre celle-ci (55), (56) et (57) qui seront remplies à l'aide de taquets anulaires en caoutchouc (58), lesquels absorberont aussi bien les efforts de rotation que les efforts de compression entre les pièces en question (55), (56) et (57), en parvenant de la sorte à ce que les efforts mentionnés ne soient pas supporées par le taraud a fileter sinon absorbés par l'ensemble postérieur qui le fixe et plus concrètement par les caoutchoucs (58).

L'ensemble défini jusqu 'ici repose sur des taquets (32) régulables dans le sens de la hauteur situés sur les pieds de la table, lesquels offrent une adaptation parfaite au terrain ou au sol sur lequel se trouve la machine, en precisant que lesdits taquets (32) se caractérisent par le fait d'absorber les vibrations du fait de leur constitution caoutchouteuse, ce qui offre une stabilité additionnelle au banc de travail.

Sur la figure 3 a été réaIisée une coupe de la table de travail, de manière à definir l'emplacement de certains équipements alimentateurs du circuit hydraulique, auquel il est possible d'accéder par une porte (33), ainsi qu'on peut l'observer sur la figure 2.

Sur la figure 3, se situant à la base intérieure (50) de la table de travail, a été disposé en premier lieu un réservoir (34) contenant le fluide du circuit hydraulique qui sera généralement de l'huile a usage industriel, lequel dispose d'un bouchon de remplissage (35) à sa partie supérieure et d'un bouchon de vidange (36) à travers la base inférieure (59), en dehors d'être doté d'un viseur (37) de niveau réel de fluide à l'intérieur du réservoir (34).

Pour alimenter et pressuriser le fluide dans le circuit, celui-ci a été doté d 'un moteur électrique (38) de pompage de fluide, associé au réservoir (34) et au circuit hydraulique, dont le débit se contrôlera depuis l'électrovanne (39) à laquelle seront raccordées les conduites de fluide destinées a alimenter la poupée (14). Il existe également au même emplacement mais situé sur le côté latéral opposé sur la base (51) le réservoir d'huile de refroidissement (41), doté d'une motopompe (42) et d'une valve anti-retour (43) à travers lesquels sera alimentée la sortie de liquide de refroidissement avant son contrôle défini plus haut.

Nous considerons désormais suffisamment décrite la nature de la présente invention, ainsi que la forme ou disposition visant à la mettre en pratique. Ajoutons simplement que le système de l'invention peut subir toute une série de modifications sur des parties de son contenu, compte tenu que ces alterations ne modifient guère de manière substantielle les caractéristiques revendiquées ci-apres.

## Revendications

1. Machine à tarauder électrohydromécanique, laquelle se compose d'une table de travail sur laquelle s'appuie un bras (2) (6) (9) (11) articulé doté des degrés de liberté pour placer une poupée de filetage (14) montée sur son extrémité, sur l'un des côtés de la table de travail se trouvant la base du bras articulé, lequel se déplace sur n'importe quelle position de ladite table, ce bras consistant en une barre élévatrice (2) se caractérisant par le fait que la barre élévatrice est coaxiale à une barre intérieure (3) existant entre les deux barres élévatrice et intérieure dans sa partie inférieure un ressort (4) ayant pour fonction de séparer ladite partie intérieure (3), ladite barre élévatrice (2), la position d'élévation se fixant à l'aide de tendeurs de serrage (5), se situant au-dessus de ces tendeurs de serrage (5), au-dessus desquels se situent une union articulée (6a) qui permet de faire tourner un bras support (6) situé ensuite selon un axe de rotation défini dans ladite union, ce bras support (6) s'étendant légèrement incliné ascendant vers une seconde union (8) située en bout de course de ce bras support (6) avec un corps prismatique (9), ledit corps prismatique étant le protecteur d'un système intérieur de barres de guidage qui consiste en deux barres-rail de guidage (90) par lesquels roulera une boîte coulissante (91) à l'aide de roulements longitudinaux (93), l'ensemble étant doté à son union avec une barre de fixation verticale (94) du système de barres coulissantes, les deux roulements coniques (95) inférieur et supérieur permettant le mouvement de rotation dudit ensemble, ce système étant assisté par deux barres symétriques longitudinales (96) servant de barres de stabilisation, ainsi qu'une barre supérieure longitudinale (97), dont la fonction n'est autre que celle de servir d'anti-torsion de l'ensemble, et une articulation double (10) se situant en bout de course de ce protecteur du système de barres où viennent s'unir un parallélogramme (11) avec un mouvement de rotation vertical, l'extrémité de celui-ci (11) étant équipé de la poupée de taraudage (14).

2. Machine à tarauder électrohydromécanique, selon la première revendication, se caracterisant par le fait de disposer d'un contrôle électronique, auquel on peut accéder et obtenir de l'information à travers les différentes commandes, sélecteurs et voyants disposés sur la partie frontale supérieure de la table de travail (1), ces derniers etant un premier interrupteur (16) d'extinction ou l'allumage général de la machine et des dispositifs que contient la machine; un premier commutateur (18) de contrôle de l'expulsion d'huile ou de liquide de refroidissement à diriger sur le taraud de filetage; deux voyants lumineux (19) (20), lesquels indiquent d'une part, pour le premier (19), la marche de la poupée de filetage, et d'autre part, pour le second (20), l'allumage général de la machine; deux commandes (21a) (21b) qui déterminent respectivement la régulation de la vitesse de filetage du taraud dans le sens du filetage et le sens d'extraction du taraud une fois filetée la pièce sur laquelle on travaille; un voyant ou indicateur (22) comportant trois uniées de displays à 7 segments, à travers quoi on obtient la vitesse de filetage du taraud offerte en tours/minute; un bloc de régulation et de mesure du circuit hydraulique interne qui active le moteur de filetage, ces derniers consistant en un régulateur (23) de la pression du circuit hydraulique, un manomètre (24) indicateur de ladite pression et une valve (25) protectrice de manomètre.

3. Machine à tarauder électrohidromécanique, selon la première revendication, se caracterisant par le fait que sur la poupée de filetage (14) a été incorporé un moteur hydraulique (26) et un réducteur (27) comme éléments moteurs du porte-taraud, qui couvrent la gamme de vitesses de filetage pour laquelle a été dessinée la machine de l'invention, un interrupteur (2) se situant sur une commande ou poignée (28) de la tête de filetage (14) qui distingue le fonctionnement complementaire des éléments moteurs, moteur hydraulique (26) ou réducteur (27), lesquels sont actionnés directement par bouton-poussoir (30) qui lorsqu'on l'actionne permet le passage d'un signal électrique qui excite le contact associé qui fermera le circuit électrique, ledit circuit électrique s'ouvrant par l'actionnement automatique d'une photocellule (52) comme fin de course du filetage, ledit contacteur se desexcitant pour que se verrouille un second contacteur qui fera tourner le moteur en sens contraire, de manière à extraire le taraud de filetage du file realisé, sans endommager ce dernier.

4. Machine à tarauder électrohydromécanique, selon les revendications antérieures, se caracterisant par le fait que pour alimenter le moteur hydraulique (26), comme élément moteur du taraud à fileter ont été placés à l'interieur de la table de travail les équipements indispensables à cette fin, auxquels il est possible d'accéder a travers une porte de face (33), ces équipements se situant a la base intérieure de la table de travail (1), lesquels consistent en un réservoir (34) de fluide du circuit hydraulique, qui généralement sera d'huile à usage industriel, doté d'un bouchon (35) de remplissage a sa partie supérieure et d'un bouchon de vidange (36) à travers la base inférieure (50), en dehors d'être doté d'un viseur (37) de niveau réel de fluide a l'intérieur de ce réservoir (34); d'un moteur électrique (38) de pompage de fluide, associé à ce réservoir (34) et au circuit hydraulique, dont le débit sera contrôlé à partir d'une électrovanne (39) de fluide, laquelle alimentera la poupée (14).

5. Machine à tarauder électrohydromécanique, selon la seconde revendication, se caracterisant par le fait que le premier commutateur (18) du contrôle électronique dispose pour l'expulsion contrôlée d'huile ou de liquide de refroidissement, compte 3 positions, qu'il est possible de selectionner soit par déconnexion de l'expulsion d'huile de refroidissement, une connexion permanente qui permet à tout moment l'expulsion d'huile de réfroidissement vers le taraud à fileter et une troisième position, ou position économique, laquelle permet l'expulsion d'huile ou de liquide au moment où le taraud réalise un travail quelconque de filetage, en controlant à partir de ce premier commutateur (18) la sortie d'huile à travers une conduite (40) située dans un endroit proche de la poupée (14), laquelle provient d'un ensemble d'alimentation en huile se composant d'un réservoir (41) d'huile appuyé et connecté à une motopompe (42) et a une valve anti-retour (43).

6. Machine à tarauder electrohydromécanique, selon la première et la seconde revendication, se caracterisant par le fait que comporte un porte-taraud (31) consistant en un porte-pinces a changement rapide sur laquelle seront placés les tarauds en sens vertical.

7. Machine à tarauder électrohydromécanique, selon les revendications antérieures, se caractérisant par le fait que s'appuie sur des taquets (32) régulables en hauteur de manière indépendante, situés sur les pieds de la table de travail.

8. Machine à tarauder électrohydromécanique, selon la sixieme revendication, se caracterisant par le fait qu'a dans le porte-taraud (31) a été integrée un système d'anticassure de tarauds consistant dans la mise en place d'une série de taquets et anneaux (58) caoutchoucs entre l'axe (55) de poupée et la douille (57) de poupée où se situent les tarauds, tous deux étant réliés par un cylindre d'union (56), la position de ces caoutchoucs (58) étant parallèle aux deux côtés supérieur et inférieur de ce cylindre d'union (56) placé à l'intérieur.

## Claims

1. Electrohydromechanical threading machine, which is comprised of a worktable, with an articulated arm (2) (6) (9) (11) supported on it. This arm has degrees of freedom to place a thread headpiece (14) mounted on its end. The base of the articulated arm is placed on one of the sides of the worktable, which moves on any position of this table, this arm being comprised of an elevating bar (2), which is **characterised by** the fact that the elevating bar is coaxial to an inside bar (3) with a spring (4) between the two, elevating and inside, bars, whose function is to separate the aforementioned inside part (3). The aforementioned elevating bar (2), whose elevation position is secured with turnbuckles (5), is placed above these turnbuckles (5), on which an articulated joint (6a) is situated, which permits the rotation of a support arm (6) situated after this according to a rotation axis defined in this joint. This support arm (6) extends in a slightly ascending plane towards a second joint (8) situated at the end of stroke of this support arm (6) with a prismatic body (9). This prismatic body protects an inner system of guide bars, which is comprised of 52 guide rail bars (9) along which a sliding box (91) will run, with the aid of longitudinal bearings (93). The whole assembly, at the joint, has a vertical fastening bar (94) for the sliding bar system, permitting the two upper and lower tapered bearings (95) the rotation movement of this assembly. This system is helped by two longitudinal symmetric bars (96), which act as stabilisation bars, as well as an upper longitudinal bar (97), which has an anti-torsion function respect to the assembly, and a double articulation (10), which is situated in the end of stroke of this protector of the bar system where a parallelogram (11) is joined with a vertical rotation movement, whose end (11) is equipped with a thread headpiece (14).

2. Electrohydromechanical threading machine, according to the first claim, which is **characterised by** the fact that it has an electronic control, which can be accessed and information obtained from, through the different controls, selectors and pilot lights situated on the upper front part of the worktable (1), the latter being a first general on/off switch (16) for the machine and the devices that the machine contains; a first selector switch (18) to control the expulsion of oil or cooling liquid, which must be directed at the thread tap, two luminous pilot lights (19) (20), which indicate, on the one hand, for the first (19), the operation of the thread headpiece and, on the other hand, for the second (20), the general ignition of the machine; two controls (21a) (21b), which respectively determine the regulation of the threading speed of the tap in the threading direction and in the extraction direction of the tap once the part being worked on has been threaded; a pilot light or indicator (22), which has three 7-segment display units, through which the threading speed of the tap expressed in r.p.m. is obtained; a regulation and measurement block of the internal hydraulic circuit, which activates the threading motor, the latter having a hydraulic circuit pressure regulator (2), a manometer (24), to indicate this pressure and a manometer protection valve (25).

3. Electrohydromechanical threading machine, according to the first claim, which is **characterised by** the fact that a hydraulic motor (26) and a reducer (27) have been fitted onto the thread headpiece (14), as driving elements for the tap-holder, which cover the range of threading speeds for which the machine of the invention has been designed, a switch (2), which is situated on a control or grip (28) of the thread headpiece (14), which distinguishes the additional operation of the driving elements, hydraulic motor (26) or reducer (27), which are directly activated by a pushbutton (30), which when activated, permits the passing of an electrical signal, which excites the associated contact, which will close the electrical circuit. This electrical circuit is opened through the automatic operation of a photocell (52) as end of stroke of the threading. This contactor de-excites in order for a second contactor to be locked, which will make the motor turn in the opposite direction, so that the thread tap of the thread made can be extracted, without damaging the latter.

4. Electrohydromechanical threading machine, according to the previous claims, which is **characterised by** the fact that in order to supply the hydraulic motor (26), as a driving element of the thread tap, the basic equipment has been fitted inside the worktable for this purpose, which can be accessed through a front door (33). This equipment is situated on the inside base of the worktable (1) and is comprised of a hydraulic circuit fluid tank (34), which will generally be oil for industrial use, equipped with a filling plug (35) on the upper part and an emptying plug (36) through the lower base (50), as well as a sight (37) for the real fluid level on the inside of this tank (34), an electrical fluid pumping motor (38), associated with this tank (34) and with the hydraulic circuit, whose flow will be controlled by a solenoid valve (3) for fluid, which will feed the headpiece (14).

5. Electrohydromechanical threading machine, according to the second claim, which is **characterised by** the fact that the first selector switch (1) of the electronic control for the controlled expulsion of oil or of cooling liquid has 3 positions, which can be selected by disconnecting the expulsion of the cooling oil, a permanent connection, which permits the expulsion of the cooling oil towards the threading tap at any time, and a third position, or economical position, which permits the expulsion of oil or of liquid when the tap carries out any threading work. This first selector switch (18) controls the outlet of oil through a conduit (40) situated in a place close to the headpiece (14), which comes from an oil feeding unit, which is comprised of an oil tank (41) supported and connected to a motor pump (42) and to an anti-return valve (43).

6. Electrohydromechanical threading machine, according to the first and second claims, which is **characterised by** the fact that it includes a tap-holder (31), which is comprised of a rapid change clip-holder, which the taps will be placed on in vertical direction.

7. Electrohydromechanical threading machine, according to the previous claims, which is **characterised by** the fact that it is supported on blocks (32) whose height can be adjusted independently, situated on the worktable legs.

8. Electrohydromechanical threading machine, according to the sixth claim, which is **characterised by** the fact that on the tap-holder (31) a tap breakage-proof system has been incorporated, which consists in placing a series of blocks and rubber rings (58) between the axle (55) of the headpiece and the bushing (57) of the headpiece where the taps are situated, both of them being joined by a connection cylinder (56), the position of these rubbers (58) being parallel to the two upper and lower sides of this connection cylinder (56) placed on the inside.

## Patentansprüche

1. Elektrische, hydromechanische Gewindebohrmaschine, bestehend aus einem Arbeitstisch, auf dem ein beweglicher Arm (2) (6) (9) (11) angebracht ist, der über eine ausreichende Bewegungsfreiheit für das Anbringen eines Gewindescheidkopfs (14) am Ende des Arms verfügt. Auf einer Seite der Maschine befindet sich die Basis des beweglichen Arms, der in einer beliebigen Position über dem Tisch verfahren werden kann. Der Arm selbst besteht aus einer Hubstange (2), die **dadurch gekennzeichnet ist, daß** sie koaxial zu einer inneren Stange (3) angebracht ist und zwischen der Hubstange und der inneren Stange eine Feder (4) existiert, deren Funktion die Distanzhaltung des genannten inneren Teils (3) ist. Die oben erwähnte Hubstange (2), deren ausgefahrene Stellung mit Hilfe von Spannern (5) festgestellt wird, ist oberhalb dieser Spanner (5) angebracht, auf denen ein Verbindungsgelenk (6a) sitzt, mit welchem die Drehbewegung eines Stützarms (6) möglich gemacht wird, der in Abhängigkeit der von dem Verbindungsgelenk ausgebildeten Rotationswelle positioniert wird. Der erwähnte Stützarm (6) verläuft leicht nach oben steigend zu einem am Ende des Hubs dieses Stützarms (6) sitzenden zweiten Verbindungselement mit einem prismatischen Körper (9). Dieser prismatische Körper wirkt als Schutz eines internen Führungsstangensystems, das aus zwei als Führungsschienen ausgebildeten Stangen (9) besteht, auf denen mit Hilfe von Längslagern (93) ein Laufwagen (91) läuft. In seiner Verbindung besteht dieser Zusammenbau aus einer vertikalen Feststellstange (94) der als Laufschienen ausgebildeten Stangen. Die beiden oberen und unteren konischen Lager (95) ermöglichen die Rotationsbewegung des genannten Zusammenbaus, wobei dieses System von zwei symmetrischen und als Stabilisierungsstangen dienenden Längsstangen (96) und einer oberen Längsstange (97) unterstützt wird, deren Aufgabe die Vermeidung des Verdrehens des Zusammenbaus ist, sowie von einem doppelten und am Hubende dieser Schutzvorrichtung des Stangensystems sitzenden Gelenk (10). An diesem Hubende ist schließlich ein eine vertikale Rotationsbewegung ausführendes Parelellogramm (11) mit angebunden, an dessen Ende (11) der Gewindeschneidkopf (14) sitzt.

2. Elektrische, hydromechanische Gewindebohrmaschine nach dem ersten Patentanspruch, **dadurch gekennzeichnet, daß** die Maschine mit einer elektronischen Steuerung ausgerüstet ist, auf die zum Erhalt von Information über die auf der Vorderseite des Arbeitstisches (1) angebrachten verschiedenen Schaltelemente, Wahlschalter und Leuchtmelder zugegriffen werden kann. Bei diesen Schaltelementen handelt es sich um einen ersten Hauptschalter (16) für das Ein- und Ausschalten der Maschine und der dazugehörigen Vorrichtungen, einen ersten Wahlschalter (18) für das Ausstoßen des auf den Gewindebohrer zu richtenden trahls von Öl- oder Kühlmittel, zwei Leuchtmelder (19) (20), von denen der erste (19) den Betriebszustand des Bohrkopfes und der zweite (20) den allgemeinen Betriebszustand der Maschine anzeigen, zwei Schaltelemente (21a) (21b), welche die Geschwindigkeit des Gewindebohrers in der Schraubrichtung bzw. die Ausfahrrichtung des Gewindebohrers aus dem Gewinde im Anschluß an das Gewindebohren anzeigen, eine Leuchtanzeige (22) mit zwei 7-Segment-Anzeigen, mit denen die Geschwindigkeit des Gewindebohrers in U/min angegeben werden kann und schließlich eine Regel- und Meßeinheit des internen und den Schraubmotor antreibenden Hydraulikkreises, bestehend aus einem Regler (23) für den hydraulischen Druck und einem diesen Druck anzeigenden Manometer (24) sowie einem dieses Manometer schützenden Ventil (25).

3. Elektrische, hydromechanische Gewindebohrmaschine nach dem ersten Patentanspruch, **dadurch gekennzeichnet, daß** an dem Gewindeschneidkopf (14) ein hydraulischer Motor (26) und ein Untersetzungsgetriebe (27) als Antriebseinheit für das Bohrfutter angebracht sind, mit welcher der gesamte Geschwindigkeitsbereich für das Gewindebohren eingestellt werden kann, für den die Maschine nach dieser Erfindung vorgesehen ist sowie ein auf einem Griff oder Knauf (28) des Gewindeschneidkopfs (14) sitzender Schalter, mit dem die Zusatzfunktionen der Antriebselemente, des hydraulischen Motors (26) bzw. des Untersetzungsgetriebes (27) gewählt werden können, welche direkt mit einer Taste (30) aktiviert werden. Beim Betätigen dieser Taste wird ein elektrische Signal freigegeben, das einen angeschlossenen Kontakt beaufschlagt, mit dem der Schaltkreis geschlossen wird. Dieser Schaltkreis wird dann durch das automatische Wirken einer als Endschalter des Gewindeschneidwegs wirkenden Fotozelle (52) geöffnet, wodurch der genannte Schütz abfällt und dadurch ein zweiter Schütz blockiert wird, welcher den Motor in der Gegenrichtung drehen läßt zu dem Zweck, den Gewindebohrer aus dem gebohrten Gewinde herauszudrehen ohne dieses zu beschädigen.

4. Elektrische, hydromechanische Gewindebohrmaschine nach den obigen Patentansprüchen, **dadurch gekennzeichnet, daß** die für die Speisung des hydraulischen Motors (26) als Antriebselement für den Gewindebohrer benötigten Ausrüstungen im Inneren des Arbeitstisches angeordnet und über eine vordere Tür (33) zugänglich sind. Die hier angesprochenen Ausrüstungen sitzen dabei an der Basis des Arbeitstisches (1) und bestehen aus einem Tank (34) für die Flüssigkeit des Hydraulikkreises, die normalerweise Öl für den industriellen Einsatz sein wird, versehen mit einem Füllstutzen und Deckel (35) auf der oberen Seite und einem Auslaßstutzen (36) über die untere Basis (50) sowie einem Schauglas (37) für die Überwachung des Füllstands im Inneren des Tanks (34). Weiterhin gehören zu der hier angesprochenen Ausrüstung ein dem Tank (34) und dem Hydraulikkreis zugeordneter elektrischer Motor (38) für das Pumpen der den Bohrkopf (14) speisenden Hydraulikflüssigkeit und schließlich ein Magnetventil für Flüssigkeiten (39) zur Kontrolle des Durchflusses.

5. Elektrische, hydromechanische Gewindebohrmaschine nach dem zweiten Patentanspruch, **dadurch gekennzeichnet, daß** der erste Wahlschalter (18) der elektronischen Steuerung für den gesteuerten Ausstoß des Öls bzw. der Kühlflüssigkeit über 3 Stellungen verfügt, von denen eine das Abschalten des Ausstoßes von Öl bzw. Kühlflüssigkeit zur Folge hat, die zweite ein permanentes Einschalten dieser Funktion bewirkt und damit den Ausstoß von Öl bzw. Kühlflüssigkeit auf den Gewindebohrer zu einem beliebigen Zeitpunkt möglicht macht und die dritte oder auch ökonomische Stellung zur Folge hat, daß das Öl bzw. die Kühlflüssigkeit nur in dem Moment ausgestoßen wird, in dem ein beliebiger Gewindeschneidvorgang ausgeführt wird. Mit dem genannten Wahlschalter (18) wird das Austritt von Öl über eine in der Nähe des Bohrkopfes (14) geführte Leitung (40) gesteuert, die von einer Ölspeisegruppe kommt, welche aus einem Öltank (41), einer daran angeschlossenen Motorpumpe (42) und einem Antirücklaufventil (43) besteht.

6. Elektrische, hydromechanische Gewindebohrmaschine nach dem ersten und zweiten Patentanspruch, **dadurch gekennzeichnet, daß** die Maschine mit einem Bohrfutter (31) mit einer Schnellwechselklemme ausgerüstet ist, mit welcher die Gewindebohrer in vertikaler Stellung gehalten werden.

7. Elektrische, hydromechanische Gewindebohrmaschine nach den obigen Patentansprüchen, **dadurch gekennzeichnet, daß** die Maschine mit unabhängigen und in der Höhe verstellbaren Klötzen (32) ausgerüstet ist, die an den Beinen des Arbeitstisches angebracht sind.

8. Elektrische, hydromechanische Gewindebohrmaschine nach dem sechsten Patentanspruch, **dadurch gekennzeichnet, daß** in das Bohrfutter (31) ein Antibruchsystem für Gewindebohrer integriert ist, das aus dem Einsetzen einer Reihe von Klötzen und Ringen (58) aus Gummi zwischen die Welle (55) und die Buchse (57) des Bohrkopfes besteht, d.h. an der Stelle, an der die Gewindebohrer sitzen, wobei die Verbindung der beiden Elemente aus einem Verbindungszylinder (56) besteht und die Gummiteile (58) parallel zu der oberen und unteren Seite dieses im Inneren angebrachten Verbindungszylinders (56) positioniert sind.
